# EUROPEAN PATENT APPLICATION

(11) **EP 4 761 382 A1**
(43) Date of publication of application: **17.06.2026**
(21) Application number: 24864557.4
(22) Date of filing: 06.09.2024
(51) Int. Cl.: H04W 52/02

(54) **COMMUNICATION METHOD AND APPARATUS**

(30) Priority: 12.09.2023 CN 202311173026
(71) Applicant: HUAWEI TECHNOLOGIES CO., LTD., Shenzhen 518129 (CN)
(72) Inventor: ZHOU, Han, Shenzhen, Guangdong 518129 (CN); TIE, Xiaolei, Shenzhen, Guangdong 518129 (CN); HUANG, Wenwen, Shenzhen, Guangdong 518129 (CN); HUA, Meng, Shenzhen, Guangdong 518129 (CN)
(74) Representative: Gill Jennings & Every LLP
(86) International application number: PCT/CN2024/117590
(87) International publication number: WO 2025/055837

(57) **Abstract**

A communication method and apparatus are applied to the field of mobile communication technologies, to reduce power consumption of a secondary functional module in a terminal device for monitoring a synchronization signal and a wake-up signal. The method includes: The terminal device receives information about a first time window, and detects a synchronization signal of at least one cell in the first time window via the secondary functional module, where the first time window includes a monitoring occasion of the synchronization signal, and a monitoring occasion of the wake-up signal is outside the first time window; and the terminal device may further perform time-frequency synchronization, neighboring cell measurement, serving cell measurement, or camped-on cell measurement based on the synchronization signal. Because the secondary functional module does not need to monitor a synchronization signal outside the first time window, the secondary functional module in the terminal device may sleep in time that is outside the first time window and that does not include the WUS monitoring occasion, to reduce power consumption.

## Description

### CROSS-REFERENCE TO RELATED APPLICATIONS

This application claims priority to Chinese Patent Application No. 202311173026.1, filed with the China National Intellectual Property Administration on September 12, 2023 and entitled "COMMUNICATION METHOD AND APPARATUS", which is incorporated herein by reference in its entirety.

### TECHNICAL FIELD

This application relates to the field of mobile communication technologies, and in particular, to a communication method and apparatus.

### BACKGROUND

With development of technologies, a 5th generation mobile communication technology (5th Generation Mobile Communication Technology, 5G) is gradually popularized. A 5G network (also referred to as new radio (new radio, NR)) supports a larger transmission bandwidth, more transceiver antenna arrays, a higher transmission rate, and a more flexible scheduling mechanism at a smaller granularity. However, this greatly increases a power consumption burden of a terminal device (user equipment, UE).

To reduce power consumption of the UE, the 3rd Generation Partnership Project (3rd Generation Partnership Project, 3GPP) introduces a research topic of power consumption reduction in the NR Rel-16/17 standard version. A currently proposed method is to apply a secondary functional module with low power consumption to the 5G network. Specifically, when a wake-up signal (wake-up signal, WUS) is monitored, only the secondary functional module is enabled, so that a main functional module is in a deep sleep or power-off state. After receiving the WUS, the secondary functional module wakes up or enables the corresponding main functional module.

In addition, to provide a time synchronization function for the secondary functional module, the secondary functional module further receives a synchronization signal (synchronization signal, SS) sent by a base station. Currently, power consumption of the secondary functional module for monitoring the synchronization signal and the wake-up signal is excessively high.

### SUMMARY

This application provides a communication method and apparatus, to reduce power consumption of a secondary functional module for monitoring a synchronization signal and a wake-up signal.

According to a first aspect, a communication method is provided. The communication method is applied to a terminal device or a chip system in the terminal device, where the terminal device includes a main functional module and a secondary functional module, and power consumption of the secondary functional module is lower than that of the main functional module. For example, an execution body is the terminal device. The method may be implemented by using the following steps: The terminal device receives information about a first time window, where the first time window includes a monitoring occasion of a synchronization signal, and a monitoring occasion of a wake-up signal is outside the first time window; the terminal device detects a synchronization signal of at least one cell in the first time window via the secondary functional module; and the terminal device performs time-frequency synchronization, neighboring cell measurement, serving cell measurement, or camped-on cell measurement based on the synchronization signal.

According to the foregoing method, the terminal device may monitor, based on the received information about the first time window, the synchronization signal in the first time window via the secondary functional module. In addition, because the monitoring occasion of the wake-up signal is outside the first time window, the wake-up signal does not need to be monitored via the secondary functional module in the first time window. In addition, because the secondary functional module does not need to monitor a synchronization signal outside the first time window, the secondary functional module may sleep in time that is outside the first time window and that does not include the WUS monitoring occasion, to reduce power consumption. In addition, because the SS monitoring occasion is in the first time window and the WUS monitoring occasion is outside the first time window, signal interference between the SS and the WUS may be reduced.

In addition, because the synchronization signal and the wake-up signal are sent in a time division manner, signal interference may be reduced.

In a possible implementation, the terminal device may further detect, via the secondary functional module, a wake-up signal on the monitoring occasion of the wake-up signal outside the first time window.

According to this implementation, the terminal device only needs to monitor, via the secondary functional module, the wake-up signal on the monitoring occasion of the wake-up signal outside the first time window, and does not need to monitor the wake-up signal in the first time window.

In a possible implementation, the terminal device may further determine that neighboring cell measurement results corresponding to synchronization signals of all cells in the first time window do not meet a receiving condition of the wake-up signal; and perform a cell search via the main functional module.

According to this implementation, when the neighboring cell measurement results corresponding to the synchronization signals of all the cells in the first time window each do not meet the receiving condition of the wake-up signal, the terminal device may switch to the main functional module to perform the cell search. For example, if no synchronization signal that meets the receiving condition of the wake-up signal is detected on monitoring occasions of all the synchronization signals in the first time window, the terminal device switches to the main functional module. Therefore, a proper condition for the main functional module to perform the cell search is proposed, so that communication quality is considered while power consumption of the main functional module is reduced.

According to a second aspect, a communication method is provided. The method may be implemented by a network device or a component in the network device, and the network device may also be referred to as a communication apparatus. The component in this application may include, for example, at least one of a chip, a chip system, a processor, a transceiver, a processing unit, or a transceiver unit. For example, an execution body is the network device. The method may be implemented by using the following steps: The network device sends information about a first time window, where the first time window includes a monitoring occasion of a synchronization signal, and a monitoring occasion of a wake-up signal is outside the first time window; and the network device may further send a synchronization signal of at least one cell in the first time window.

In a possible implementation, the network device may further send a wake-up signal on the monitoring occasion of the wake-up signal outside the first time window.

For beneficial effects of the second aspect and the possible implementations of the second aspect, refer to corresponding descriptions in the first aspect. Details are not described again.

In a possible implementation of the first aspect and/or the second aspect, the synchronization signal includes a first synchronization signal of a first cell, and the wake-up signal includes a first wake-up signal of the first cell, where a frequency domain position corresponding to the first synchronization signal is different from a frequency domain position of the first wake-up signal.

According to this implementation, the frequency domain position of the first synchronization signal of the first cell is different from that of the first wake-up signal of the first cell. In other words, a synchronization signal and a wake-up signal of a same cell are sent in an inter-frequency manner, so that interference between the synchronization signal and the wake-up signal may be reduced. The wake-up signal and the synchronization signal are sent in a frequency division manner, so that time-frequency resources occupied by the synchronization signal on a single wake-up signal transmit frequency are reduced, to increase a capacity of the wake-up signal on the single frequency. This helps a network configure receive bandwidths of secondary functional modules in a plurality of terminal devices on a same wake-up signal frequency. In this way, the network may deploy more low-power consumption users to a single frequency, to avoid that a plurality of frequencies need to be allocated to the wake-up signal.

In a possible implementation of the first aspect and/or the second aspect, the synchronization signal further includes a second synchronization signal of a second cell, and the frequency domain position corresponding to the first synchronization signal is the same as a frequency domain position corresponding to the second synchronization signal.

According to this implementation, synchronization signals of a plurality of different cells may be sent at a same frequency. Therefore, the secondary functional module in the terminal device does not need to monitor the synchronization signals at different frequencies, so that power consumption may be further reduced.

In a possible implementation of the first aspect and/or the second aspect, the wake-up signal includes a second wake-up signal of the second cell, and the frequency domain position corresponding to the second synchronization signal is different from a frequency domain position of the wake-up signal of the second cell.

According to this implementation, the wake-up signal of the second cell and the synchronization signal of the second cell may be sent at different frequencies, to reduce signal interference.

In a possible implementation of the first aspect and/or the second aspect, the frequency domain position corresponding to the first wake-up signal is different from the frequency domain position of the second wake-up signal.

According to this implementation, a plurality of different cells send wake-up signals at different frequencies, to reduce signal interference between the wake-up signals of different cells.

In a possible implementation of the first aspect and/or the second aspect, the terminal device may determine the frequency domain position of the first wake-up signal based on the first synchronization signal.

According to this implementation, after detecting a synchronization signal of any cell, the terminal device may determine a frequency domain position of a wake-up signal of the cell based on the synchronization signal, to monitor and receive the wake-up signal at a correct frequency, thereby reducing power consumption.

In a possible implementation of the first aspect and/or the second aspect, a frequency domain position of the wake-up signal is the same as a frequency domain position of the synchronization signal.

According to this implementation, the wake-up signal and the synchronization signal may alternatively be sent at a same frequency, to reduce signal transmission complexity. Because the monitoring occasion of the synchronization signal is in the first time window, when the length of the first time window is fixed, to avoid excessive time-frequency resources of the wake-up signal of the base station may be occupied by the synchronization signal, thereby increasing a capacity of the wake-up signal.

According to a third aspect, a communication apparatus is provided. The apparatus may implement the method according to the first aspect or the second aspect and any possible design of the first aspect or the second aspect. The apparatus has the function of the foregoing terminal device or network device. The apparatus is, for example, a terminal device, a functional module in the terminal device, a network device, or a functional module in the network device.

In an optional implementation, the apparatus may include a module in one-to-one correspondence with the method/operation/step/action according to the first aspect or the second aspect. The module may be a hardware circuit, may be software, or may be implemented by a combination of a hardware circuit and software. In an optional implementation, the apparatus includes a processing unit (sometimes also referred to as a processing module) and a communication unit (sometimes also referred to as a transceiver module, a communication module, and the like). The transceiver unit may implement a sending function and a receiving function. When implementing the sending function, the transceiver unit may be referred to as a sending unit (sometimes also referred to as a sending module). When implementing the receiving function, the transceiver unit may be referred to as a receiving unit (sometimes also referred to as a receiving module). The sending unit and the receiving unit may be a same functional module, the functional module is referred to as the transceiver unit, and the functional module may implement the sending function and the receiving function. Alternatively, the sending unit and the receiving unit may be different functional modules, and the transceiver unit is a general term for these functional modules.

For example, when the apparatus is configured to perform the method described in the first aspect or the second aspect, the apparatus may include the communication unit and the processing unit.

According to a fourth aspect, an embodiment of this application further provides a communication apparatus including a processor. The processor is configured to execute a computer program (or computer-executable instructions) stored in a memory. When the computer program (or the computer-executable instructions) is executed, the apparatus is caused to perform the method according to the first aspect or the second aspect and the possible implementations of the first aspect or the second aspect.

In a possible implementation, the processor and the memory are integrated together.

In another possible implementation, the memory is located outside the communication apparatus.

The communication apparatus further includes a communication interface. The communication interface is for communication between the communication apparatus and another device, for example, for data and/or signal sending or receiving. For example, the communication interface may be a transceiver, a circuit, a bus, a module, or another type of communication interface.

According to a fifth aspect, a computer-readable storage medium is provided. The computer-readable storage medium is configured to store a computer program or instructions. When the computer program or the instructions are run, the method according to any one of the first aspect or the second aspect and the possible implementations of the first aspect or the second aspect is implemented.

According to a sixth aspect, a computer program product including instructions is provided. When the computer program product is run on a computer, the method according to any one of the first aspect or the second aspect and the possible implementations of the first aspect or the second aspect is implemented.

According to a seventh aspect, an embodiment of this application further provides a communication apparatus, configured to perform the method according to the first aspect or the second aspect and the possible implementations of the first aspect or the second aspect.

According to an eighth aspect, a chip system is provided. The chip system includes a logic circuit (which may alternatively be understood as that the chip system includes a processor, and the processor may include a logic circuit and the like), and may further include an input/output interface. The input/output interface may be configured to input a message, or may be configured to output a message. The input/output interface may be a same interface, that is, the same interface can implement both a sending function and a receiving function. Alternatively, the input/output interface includes an input interface and an output interface. The input interface is configured to implement a receiving function, that is, configured to receive a message; and the output interface is configured to implement a sending function, that is, configured to send a message. The logic circuit may be configured to perform an operation other than the sending and receiving functions in the method according to any one of the first aspect or the second aspect and the possible implementations of the first aspect or the second aspect. The logic circuit may be further configured to transmit a message to the input/output interface, or receive, from the input/output interface, a message from another communication apparatus. The chip system may be configured to implement the method according to any one of the first aspect or the second aspect and the possible implementations of the first aspect or the second aspect. The chip system may include a chip, or may include the chip and another discrete device.

Optionally, the chip system may further include a memory, and the memory may be configured to store instructions. The logic circuit may invoke the instructions stored in the memory to implement a corresponding function.

According to a ninth aspect, a communication system is provided. The communication system may include a terminal device and a network device, which are respectively configured to implement the method shown in the first aspect or the second aspect.

For technical effects brought by the second aspect to the ninth aspect, refer to descriptions in the first aspect. Details are not described herein again.

### BRIEF DESCRIPTION OF DRAWINGS

FIG. 1 is a diagram of an architecture of a wireless communication system according to an embodiment of this application;
FIG. 2 is a diagram of sending a synchronization signal to a neighboring cell according to an embodiment of this application;
FIG. 3 is a diagram of a time domain relationship between a synchronization signal and a wake-up signal according to an embodiment of this application;
FIG. 4 is a schematic flowchart of a communication method according to an embodiment of this application;
FIG. 5 is a diagram of a first time window according to an embodiment of this application;
FIG. 6 is a diagram of another first time window according to an embodiment of this application;
FIG. 7 is a diagram of a solution of monitoring a wake-up signal based on a synchronization signal according to an embodiment of this application;
FIG. 8 is a diagram of another solution of monitoring a wake-up signal based on a synchronization signal according to an embodiment of this application;
FIG. 9 is a diagram of a structure of a communication apparatus according to an embodiment of this application; and
FIG. 10 is a diagram of a structure of another communication apparatus according to an embodiment of this application.

### DESCRIPTION OF EMBODIMENTS

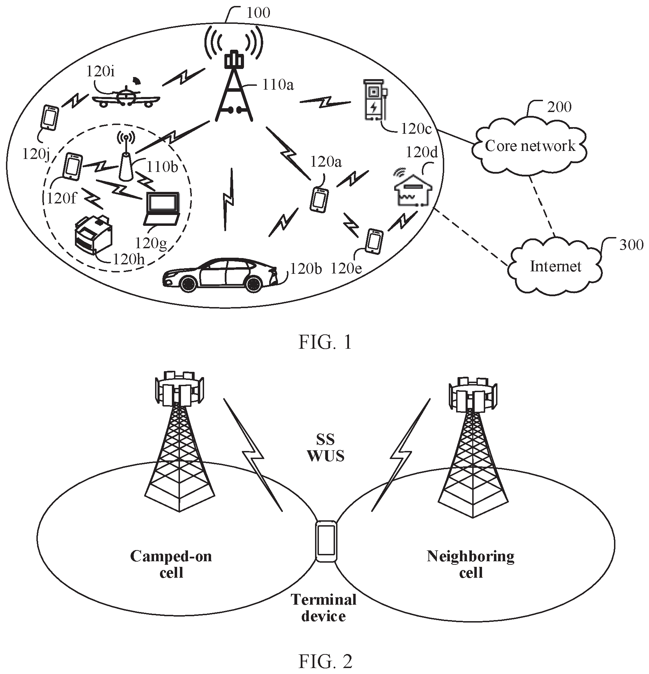

FIG. 1 is a diagram of an architecture of a communication system to which embodiments of this application are applied. As shown in FIG. 1, a communication system includes a radio access network 100 and a core network 200. Optionally, the communication system may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, functions of the core network device and logical functions of the radio access network device may be integrated into a same physical device, or some functions of the core network device and some functions of the radio access network device may be integrated into one physical device. A wired or wireless manner may be used for connection between terminals and between radio access network devices. FIG. 1 is only a diagram. The communication system may further include other network devices, for example, a wireless relay device and a wireless backhaul device, which are not shown in FIG. 1.

The radio access network device is an access device used by the terminal to access the communication system in a wireless manner. The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, a long range radio (long range radio, LoRa) system, or a vehicle-to-everything system, or the like. The radio access network device may alternatively be a module or a unit that completes some functions of the base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete a function of a part or all of physical layers. For specific descriptions of the foregoing protocol layers, refer to technical specifications related to the 3rd generation partnership project (3rd generation partnership project, 3GPP). The radio access network device may be a macro base station (for example, 110a in FIG. 1), may be a micro base station or an indoor base station (for example, 110b in FIG. 1), or may be a relay node, a donor node, or the like. A specific technology and a specific device form that are used by the radio access network device are not limited in embodiments of this application. For ease of description, in the following, the network device is used as an abbreviation of the radio access network device, and the base station is used as an example of the radio access network device.

The terminal is a device having a wireless transceiver function, and may send a signal to the base station, or receive a signal from the base station. The terminal may alternatively be referred to as a terminal device, a user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine type communication (machine type communication, MTC), an internet of things (internet of things, IoT), virtual reality, augmented reality, industrial control, autonomous driving, telemedicine, a smart grid, smart furniture, a smart office, a smart wearable, smart transportation, and a smart city. The terminal may be a mobile phone, a tablet computer, a computer having a wireless transceiver function, a wearable device, a vehicle, an airplane, a ship, a robot, a robot arm, a smart home device, or the like. A specific technology and a specific device form that are used by the terminal are not limited in embodiments of this application.

The base station and the terminal may be at fixed positions or movable. The base station and the terminal may be deployed on land, including indoor devices, outdoor devices, handheld devices, or vehicle-mounted devices; may be deployed on water; or may be deployed on an airplane, a balloon, and a man-made satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station. For the terminal 120j that accesses the radio access network 100 through 120i, the terminal 120i is a base station. However, for the base station 110a, 120i is a terminal device. In other words, communication between 110a and 120i is performed based on a radio air interface protocol. Certainly, 110a and 120i may alternatively communicate with each other by using an interface protocol between the base stations. In this case, compared with 110a, 120i is also a base station. Therefore, both the base station and the terminal may be collectively referred to as communication apparatuses. 110a and 110b in FIG. 1 may be referred to as communication apparatuses having a function of the base station, and 120a to 120j in FIG. 1 may be referred to as communication apparatuses having a function of the terminal.

Communication may be performed between the base station and the terminal, between base stations, or between terminals by using a licensed spectrum, an unlicensed spectrum, or both a licensed spectrum and an unlicensed spectrum; or may be performed by using a spectrum below 6 gigahertz (gigahertz, GHz), a spectrum above 6 GHz, or both a spectrum below 6 GHz and a spectrum above 6 GHz. A spectrum resource for wireless communication is not limited in embodiments of this application.

In embodiments of this application, the function of the base station may alternatively be performed by a module (for example, a chip) in the base station, or may be performed by a control subsystem having the function of the base station. The control subsystem having the function of the base station herein may be a control center in the foregoing application scenarios such as the smart grid, the industrial control, the smart transportation, and the smart city. The function of the terminal may alternatively be performed by a module (for example, a chip or a modem) in the terminal, or may be performed by an apparatus having the function of the terminal.

In this application, the base station sends a downlink signal or downlink information to the terminal, where the downlink information is carried on a downlink channel. The terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

Technical terms that may be involved in this application are described below.

### (1) Main functional module and secondary functional module

To reduce power consumption of a terminal device, the terminal device may use a working mode in which the main functional module and the secondary functional module work. The main functional module and the secondary functional module may be different links included in a same module, Alternatively, the main functional module and the secondary functional module may be links included in different modules. The main functional module and the secondary functional module may be communicatively connected to each other. The following describes functions of the main functional module and the secondary functional module in the terminal device.

The main functional module is configured to implement various operations and functions (for example, operations and functions such as radio resource management measurement and paging message transmission) of the terminal device, and is also referred to as a main circuit module, a main link, a main circuit, a main receiver, or the like. The main functional module is, for example, a main radio (main radio) circuit in the terminal device. The main functional module is used by the terminal device to receive downlink signaling and data in common NR. Power consumption of the main functional module in a normal working state is high, and is generally at a level of several milliwatts (mW). After the terminal device enters a radio resource control (radio resource control, RRC) idle (idle) state or an RRC inactive (inactive) state, the main functional module enters a disabled state (for example, a power saving mode or an extremely low-power consumption state). In this case, the main functional module does not perform operations such as radio resource management measurement, paging message transmission, cell reselection, and cell handover, thereby effectively reducing power consumption caused by performing the foregoing operations by the terminal device.

The idle state is a state of the terminal device that has camped on a cell but has not performed a random access procedure. In this case, the cell on which the terminal device camps is a camped-on cell. The terminal device usually enters the idle state after the terminal device is powered on or after RRC is released.

Using receiving of a paging message as an example, when being in the RRC idle state or the RRC inactive state, the terminal device may obtain a paging frame (paging frame, PF) and a position of a paging occasion (paging occasion, PO) in the PF through calculation based on a terminal device identifier (UE ID) of the terminal device, and receive a paging message on the PO in the paging frame. Regardless of whether the terminal device is in an RRC connected state, the RRC idle state, or the RRC inactive state, a same receiving module, that is, the main functional module, may be used to perform the foregoing paging message receiving procedure.

The secondary functional module may be configured to receive a low-power consumption signal from a base station. The low-power consumption signal may also be referred to as a WUS, a low-power consumption wake-up signal (low-power wake-up signal, LP-WUS), or a WUR signal. The secondary functional module may also be referred to as a wake-up link, a secondary link, a secondary circuit, a secondary receiver, or a low-power consumption receiver. The secondary functional module is, for example, a wake up radio (wake up radio, WUR) circuit in the terminal device. Compared with the main functional module, the secondary functional module has much lower power consumption.

The secondary functional module may be, for example, a radio frequency circuit and a baseband circuit that have lower power consumption. For example, the secondary functional module may not include a ring oscillator of a phase-locked loop, and may use a low noise amplifier with a higher noise factor.

In another design, the secondary functional module may be a submodule (that is, a partial module) of the main functional module, or reuse a part of circuits, devices, or the like with the main functional module. Compared with the main functional module, the secondary functional module includes fewer devices when working. For example, the secondary functional module does not include a fast Fourier transform module, a complex channel decoding module, a low-density parity check code (low-density parity check code, LDPC) decoding module, a polar decoding module, or the like, may have fewer registers and memory units, and uses a bus with a lower bandwidth. Therefore, power consumption of the secondary functional module is lower than power consumption of the main functional module.

In another design, the main functional module may be a secondary functional module in a low-power consumption working mode. For example, the main functional module is a secondary functional module when the main functional module reduces a working voltage, slows down a clock frequency, or reduces a sampling rate and a bit width of analog-to-digital sampling. Specific implementations of the main functional module and the secondary functional module are not limited in embodiments of this application.

The following uses an example in which the low-power consumption signal is the WUS for description.

The power consumption of the secondary functional module in a working state is low, is generally much lower than the power consumption of the main functional module in the working state, and is generally at a level of microwatts (µW), at a level of hundred microwatts, or even at a level of nanowatts (nW). Based on the foregoing working modes of the main functional module and the secondary functional module, when entering the RRC idle state or the RRC inactive state, the terminal device may set the main functional module to enter a disabled state, an ultra low-power consumption state, an ultra deep sleep state (ultra deep sleep), or another non-conventional working state, monitor the WUS of the base station via the secondary functional module, and wake up the main functional module through a connection to the main functional module after the WUS is monitored. In this way, the main functional module enters the working state, to be specific, the main functional module is triggered to enter the working state from the disabled state (or exit the disabled state), to restore the function of the main functional module. Optionally, the WUS may be a signal in a modulation manner like orthogonal frequency division multiplexing (orthogonal frequency division multiplexing, OFDM), on-off keying (on-off keying, OOK) modulation, amplitude-shift keying (amplitude-shift keying, ASK), or frequency-shift keying (frequency-shift keying, FSK). Optionally, after the secondary functional module wakes up the main functional module, the secondary functional module may switch from the working state to a disabled state, or the secondary functional module is always in the working state. This is not limited in this embodiment of this application.

In this application, the action of receiving, by the terminal device, the WUS via the secondary functional module may be referred to as "working on a WUR link".

### (2) WUS and SS

The WUS may include a wake-up indication that is used to wake up a specific UE or a group of UEs, or that is used to trigger a UE to perform some operations, including but not limited to: updating a system message, receiving a paging message, initiating random access, receiving disaster warning information, and the like. The wake-up indication may also include paging information. For example, the paging information is a pre-configured or predefined bit. For example, the paging information is four bits 1010.

To cause a secondary functional module to implement time synchronization and frequency synchronization, a base station may periodically or aperiodically send an SS, where the SS may be a low-power synchronization signal (low-power synchronization signal, LP-SS). The time synchronization is mainly used to provide a time synchronization function for the secondary functional module. For example, the time synchronization may be used to determine a frame, a subframe, a slot, a symbol, or the like of current time, determine whether a terminal device is in coverage of a cell, and determine whether a local clock has an offset. The frequency synchronization is mainly used by the secondary functional module to calibrate a frequency and a received signal, to avoid that receive performance deteriorates due to a deviation between a received frequency of the secondary functional module and a transmission frequency of the WUS. In this application, the time synchronization and the frequency synchronization may be referred to as time-frequency synchronization or synchronization for short.

Currently, the SS and the WUS are sent in a time division multiplexing manner. For example, the SS may be periodically sent. In one SS period, there may be a plurality of sending occasions (occasions) of the WUS. The base station may send the WUS on the occasions, or may not send the WUS. The terminal device obtains, through blind detection, whether a WUS signal is sent to the terminal device. Therefore, for the terminal device, the sending occasion of the WUS may be referred to as a monitoring occasion (monitoring occasion, MO). It may be understood that, except a time resource occupied by the SS and the WUS monitoring occasion, the secondary functional module may enter a sleep state to reduce power consumption. The WUS monitoring occasion may be preset, or may be configured by the base station. In this application, "preset" may be "predefined", for example, predefined by using a factory configuration, or defined in a related protocol like 3GPP. In addition, in this application, "configured by the base station" may mean that after the base station determines configuration information, the base station configures the related configuration information for the terminal device by using a message or information like an RRC message, a MAC control element (control element, CE), or downlink control information (downlink control information, DCI).

Currently, one of design objectives of the secondary functional module is to except that coverage of the WUS reaches a level equivalent to that of NR. Under the objective, a terminal device at an edge of a camped-on cell may receive an SS and a WUS sent by a neighboring cell. As shown in FIG. 2, a terminal device at an edge of a cell may simultaneously receive an LP-WUS signal and an LP-SS signal that are sent by each of a camped-on cell and a neighboring cell.

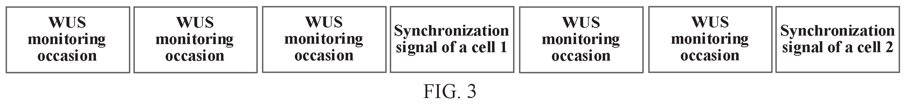

When a UE may simultaneously receive LP-SSs of a local cell and a neighboring cell, the UE may perform neighboring cell measurement via a secondary functional module, as shown in FIG. 3. Optionally, there may be LP-SSs of different cells, and there are a plurality of sending occasions of the LP-WUS in time other than the LP-SSs. An advantage of performing neighboring cell measurement via the secondary functional module is that a procedure in which the secondary functional module wakes up the main functional module and performs the neighboring cell measurement depending on the main functional module may be simplified, thereby reducing power consumption of the terminal device.

Currently, power consumption of the secondary functional module for monitoring the synchronization signal and the wake-up signal is excessively high. For example, as a quantity of neighboring cells increases, SSs of different cells are sent at different time. Therefore, in addition to the WUS monitoring occasion, the secondary functional module still needs a long time to be started to receive the SSs of the different cells. As a result, the secondary functional module cannot enter the sleep state to reduce power consumption of the secondary functional module, resulting in an increase in the power consumption of the terminal device.

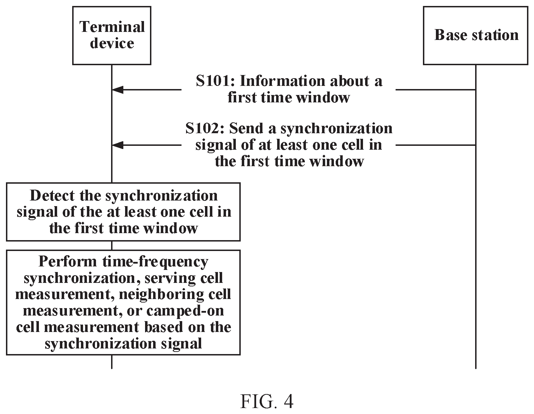

This application provides a communication method, to reduce power consumption of a secondary functional module. According to the communication method provided in this application, a base station may configure and send information about a first time window, so that a terminal device detects SSs of one or more cells in the first time window via a secondary functional module. In addition, the first time window does not include a WUS monitoring occasion, and the secondary functional module does not need to monitor a WUS in the first time window. Therefore, the synchronization signal does not need to be monitored in time that is outside the first time window and that does not include the WUS monitoring occasion, so that the secondary functional module may sleep to reduce power consumption. In addition, because the SS monitoring occasion is in the first time window and the WUS monitoring occasion is outside the first time window, signal interference between the SS and the WUS may be reduced. The following describes the method with reference to FIG. 4.

It may be understood that, in FIG. 4, the method is described by using a terminal device and a base station as execution bodies. The base station may be replaced with a network device or a network apparatus in the network device based on a requirement. In addition, the terminal device may be replaced with a UE, a terminal apparatus, or the like. The terminal device and the base station may alternatively be replaced with a chip or a chip system.

As shown in FIG. 4, the communication method provided in this embodiment of this application may include the following steps.

S101: The base station sends information about a first time window.

The information about the first time window may include information such as an occurrence period or an offset of the first time window, or the length of the first time window, and may be used to determine a time domain position of the first time window.

Correspondingly, the terminal device receives the information about the first time window, and learns of the time domain position of the first time window.

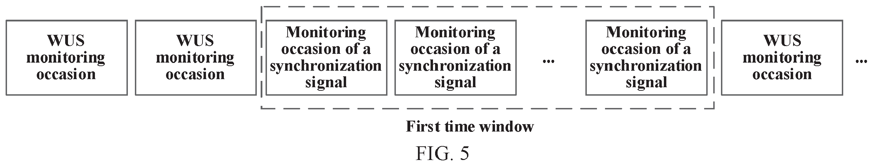

As shown in FIG. 5, the first time window includes an SS monitoring occasion of at least one cell. Different "monitoring occasions of synchronization signals" in the first time window in FIG. 5 respectively represent different SS monitoring occasions. In addition, as shown in FIG. 5, the first time window does not include a WUS monitoring occasion. In other words, the WUS monitoring occasion is outside the first time window. Therefore, the terminal device may detect, via a secondary functional module, a WUS on the WUS monitoring occasion outside the first time window.

Optionally, the terminal device receives the information about the first time window via a main functional module or the secondary functional module.

In an example of S101, the information about the first time window may be configured by the base station. For example, the base station may send the information about the first time window by using a system message or higher layer signaling, so that the terminal device obtains the information about the first time window. For example, the base station makes the information about the first time window included in an RRC message sent to the terminal device. For another example, the base station may make the information about the first time window included in a broadcast message.

In addition, it is not excluded that the terminal device and the base station use default information about the first time window. For example, the information about the first time window is preset.

S102: The base station sends the synchronization signal of the at least one cell in the first time window.

In addition, the base station may perform inter-base station coordination, so that a base station of a neighboring cell of the terminal device obtains the information about the first time window. Based on this, a serving cell and at least one neighboring cell of the terminal device each may send an SS in the first time window.

Optionally, a sending period of the SS may be the same as the occurrence period of the first time window.

Correspondingly, the terminal device detects the synchronization signal in the first time window via the secondary functional module.

Specifically, after receiving the information about the first time window, the terminal device may perform, after obtaining at least one selected SS, at least one of time synchronization, frequency synchronization, serving cell measurement, neighboring cell measurement, or camped-on cell measurement based on the SS with reference to a transmit bandwidth of the SS and a monitoring occasion for monitoring the SS. In addition, because the SS monitoring occasion is not included outside the first time window, the terminal device does not need to perform local cell measurement and/or neighboring cell measurement outside the first time window, thereby reducing search time of the UE for neighboring cell measurement.

For example, when the time domain position of the first time window is consistent with or close to a time domain position of a wake-up period of the terminal device, the terminal device may use a short wake-up period to further reduce power consumption. In addition, the terminal device may not perform enabled/disabled state switching of the secondary functional module in the first time window, to reduce power consumption caused by state switching. For example, it is assumed that the length of the first time window is 10 milliseconds (ms), a wake-up period (duty cycle) of the secondary functional module in the terminal device is 2s, and a time domain position of the wake-up period of the secondary functional module is close to the time domain position of the first time window. In this case, the terminal device keeps the secondary functional module enabled in the first time window and on a close WUS monitoring occasion, and the terminal device may make the secondary functional module sleep on a non-WUS monitoring occasion outside the first time window, to reduce power consumption.

In addition, as shown in FIG. 5, because there is the SS monitoring occasion of the at least one cell in the first time window and there is no WUS monitoring occasion in the first time window, interference between the WUS and the SS may be avoided.

In this application, the SS and the WUS may be sent at a same frequency or different frequencies. A frequency domain position of the WUS or the SS may also be referred to as a frequency position, and is a position area of a transmit bandwidth of the WUS or the SS on a transmission air interface frequency domain resource. The bandwidth is usually included in a frequency band (band), a carrier (carrier), or a BWP, and the bandwidth is less than an actual available bandwidth of the band, the carrier, or the BWP. That the SS and the WUS are sent at the same frequency means that the transmit bandwidth of the SS and the transmit bandwidth of the WUS are at a same air interface frequency domain position. For example, the transmit bandwidth of the SS is the same as the transmit bandwidth of the WUS, and the transmit bandwidth of the SS and the transmit bandwidth of the WUS are at a completely same frequency position. For another example, the transmit bandwidth of the SS is the same as the transmit bandwidth of the WUS, the frequency position of the transmit bandwidth of the SS and the frequency position of the transmit bandwidth of the WUS have an overlapping area but do not completely overlap with each other, and a time domain position of the SS does not overlap with a time domain position of the WUS. For another example, the transmit bandwidth of the SS is different from the transmit bandwidth of the WUS, the frequency position of the transmit bandwidth of the SS and the frequency position of the transmit bandwidth of the WUS have an overlapping area, and the time domain position of the SS does not overlap with the time domain position of the WUS. In addition, that the SS and the WUS are sent at different frequencies means that the transmit bandwidth of the SS and the transmit bandwidth of the WUS are at different air interface frequency domain positions, or that the transmit bandwidth of the SS and the transmit bandwidth of the WUS do not overlap with each other in frequency domain. For example, the diagram of the first time window shown in FIG. 5 may be understood as a diagram of time domain. To be specific, the SS monitoring occasion and the WUS monitoring occasion in FIG. 5 may carry the SS and the WUS at a same frequency, or may carry the SS and the WUS at different frequencies.

In an example, when the SS and the WUS are sent at the same frequency, a base station of the serving cell and a base station of the at least one neighboring cell of the terminal device each may send an SS and a WUS at a same frequency domain position or in a same frequency domain range. Correspondingly, the terminal device may receive, at the frequency domain position or in the frequency domain range, the SS and the WUS from each of the base station of the serving cell and the base station of the at least one neighboring cell.

In another example, when the SS and the WUS are sent at different frequencies, the serving cell and the at least one neighboring cell of the terminal device each may send an SS at a frequency domain position of the SS and send a WUS at a frequency domain position of the WUS. Correspondingly, the terminal device may separately monitor the SS at the frequency domain position of the SS and monitor the WUS at the frequency domain position of the WUS.

The WUS and the SS are sent at different frequencies, so that time-frequency resources occupied by the SS on a single WUS transmit frequency are reduced, to increase a capacity of the WUS on the single frequency. This helps a network configure receive bandwidths of secondary functional modules in a plurality of terminal devices on a same WUS frequency. In this way, the network may deploy more low-power consumption users to a single frequency, to avoid that a plurality of frequencies need to be allocated to the WUS.

Optionally, a frequency domain position of an SS sent by any cell may be the same as or different from a frequency domain position of a WUS sent by another cell. If the frequency domain position of the SS sent by any cell is different from the frequency domain position of the WUS of another cell, a transmit bandwidth of the SS and a transmit bandwidth of the WUS do not overlap with each other in frequency domain, to avoid signal interference between the SS and the WUS that are in a same frequency. In this application, that a cell sends a signal may mean that a base station to which the cell belongs sends the signal.

In addition, SSs sent by all cells may be at a same frequency domain position or in a same frequency domain range, or at different frequency domain positions or in different frequency domain ranges. If SSs sent by different cells are at a same frequency domain position, frequency switching may be avoided when the secondary functional module detects the SS, to help reduce power consumption.

In addition, optionally, WUSs sent by different cells may be at a same frequency domain position or in a frequency domain range, or at different frequency domain positions or in different frequency domain ranges. If the WUSs sent by different cells are at different frequency domain positions or in different frequency domain ranges, signal interference between intra-frequency WUSs of different cells may be avoided.

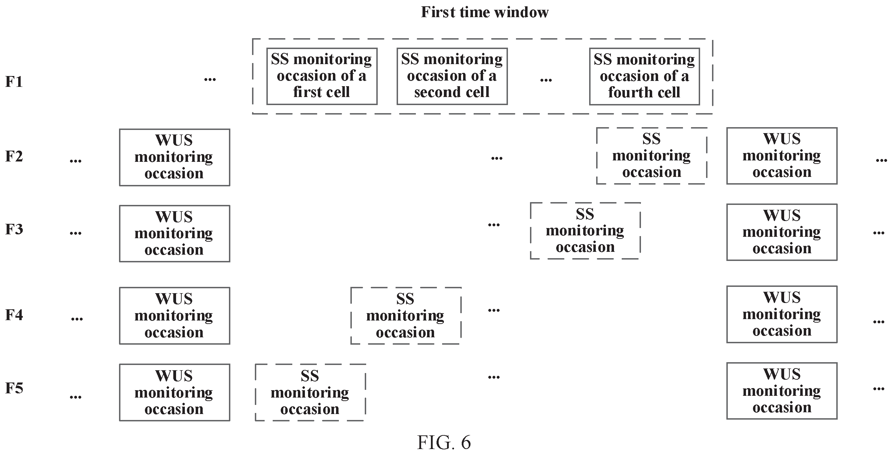

The following describes possible time-frequency position designs of SSs and WUSs of a plurality of cells with reference to FIG. 6. In this embodiment, the plurality of cells may send the SSs at a same frequency domain position F1, the plurality of cells respectively send the WUSs at different frequency domain positions, and frequency domain positions of WUSs sent by any two cells are different.

As shown in FIG. 6, at the frequency F1, an SS monitoring occasion in the first time window may carry an SS of a first cell, which is referred to as a first SS. A frequency domain position of the first SS may be F1. A WUS of the first cell is referred to as a first WUS, a frequency domain position of the first WUS is F2, and F1 is different from F2. Optionally, a time domain position of the first WUS may be on one or more WUS monitoring occasions outside the first time window. For example, the secondary functional module generally does not support receiving of two different signals, namely, the SS and the WUS, in different frequency domain positions.

In addition, in FIG. 6, at the frequency F1, an SS monitoring occasion in the first time window may further carry an SS of a second cell, which is referred to as a second SS. A frequency domain position of the second SS may be F1. In addition, at least one WUS monitoring occasion outside the first time window carries a WUS of the second cell, which is referred to as a second WUS. Optionally, the frequency domain position of the first SS is the same as the frequency domain position of the second SS.

In addition, the first time window shown in FIG. 6 further includes an SS of a third cell and an SS of a fourth cell, and a WUS of the third cell and a WUS of the fourth cell may be respectively at different frequency domain positions. For example, a frequency domain position of the WUS sent by the third cell is denoted as F4, and a frequency domain position of the WUS sent by the fourth cell is denoted as F5. Any two frequency domain positions in F1 to F5 are different.

It may be understood that, the frequency domain position of the SS in this application may be preset, or may be configured by a base station. The position of the SS herein refers to a frequency domain position of an SS of one or more cells. For example, when the frequency domain position of the SS is configured by the base station, frequency domain positions of SSs of a plurality of cells may be set to the same, and optionally, a serving cell may indicate the frequency domain position of the SS to a terminal device by using physical layer signaling or higher layer signaling. The base station may further perform inter-base station coordination with another base station, so that all cells under different base stations send SSs at the frequency domain position.

Still using FIG. 6 as an example, the first cell to the fourth cell each support sending of the SS at the frequency position F1.

The first cell to the fourth cell may include a local cell of the terminal device, and may further include a neighboring cell. In this application, the local cell is the serving cell or a camped-on cell of the terminal device.

Optionally, at the frequency domain positions F1 to F5, any two or more frequency bands may be in a same frequency band (band) or in a same bandwidth part (bandwidth part, BWP). At time domain positions other than F1 to F5 at which SSs and WUSs are sent, NR signaling and/or data may be sent between the base station and the terminal device.

Optionally, in addition to sending an SS at a frequency domain position corresponding to the SS, any cell may also send an SS at a frequency domain position of a WUS of the cell, to improve synchronization accuracy. For example, the first cell may send an SS at F2. Correspondingly, the terminal device may monitor, via the secondary functional module, the SS sent at F2 on an SS monitoring occasion based on a configuration of the SS. The SS is an intra-frequency SS of the first WUS, and is used to assist the terminal device in performing measurement and/or time-frequency synchronization. Optionally, the SS may be in the first time window, or may be outside the first time window. The SS may be periodically sent or may be aperiodically sent. This is not limited in this application. When the first cell sends the first SS at F1 and F2, that the first cell sends the SS at F2 may be in a large sending period or at a large sending interval. For example, a period in which the first cell sends the SS at F2 is greater than a period in which the first cell sends the first SS at F1, so that total sending overheads of the first cell sending the SSs are the same as sending overheads of sending the SSs at only one frequency.

In this application, when a frequency position of an SS and a frequency position of a WUS of a same cell are different, the terminal device may determine the frequency domain position of the WUS of the cell based on the SS of the cell.

For example, information such as a waveform or a sequence parameter of an SS of a cell corresponds to a frequency domain position of a WUS of the cell. Therefore, after detecting the SS, the terminal device may determine the frequency domain position of the WUS based on the correspondence. Parameter information of the SS may include a parameter used to generate an SS signal, or include a parameter carried in or indicated by the SS signal. For example, when an SS is sent in a form of a sequence, an SS parameter includes a parameter for generating a sequence of the SS, which is referred to as a sequence parameter for short below. In this application, the sequence parameter is, for example, a parameter like a root (root) value of a sequence, a cyclic shift (cyclic shift) value, or a seed point of a sequence. For example, if the sequence used to generate the SS is a Zadoff-Chu (ZC) sequence, the corresponding sequence parameter may include the root value and/or the cyclic shift value; or if the sequence used to generate the SS is a pseudo-random m sequence, the corresponding sequence parameter may include the seed point of the sequence. For another example, the parameter carried in or indicated by the SS signal may be indication information carried in the SS signal, and the indication information may correspond to the frequency domain position of the WUS of the cell.

The following describes, with reference to an example, a manner in which the terminal device determines the frequency domain position of the WUS.

Manner 1: There is a correspondence between an SS of a cell and a frequency domain position of a WUS of the cell. The terminal device may query the correspondence based on the detected SS, to determine the frequency domain position of the WUS of the cell, and then monitor the WUS of the cell on a WUS monitoring occasion based on position information of the WUS.

The terminal device may receive, from a network device, configuration information of a frequency domain position of a WUS of at least one cell. The configuration information may include a correspondence between an SS of the cell and the frequency domain position of the WUS of the cell. Optionally, a base station may indicate the configuration information to the terminal device by using an RRC message, a MAC CE, or DCI. Optionally, the configuration information may further include indication information of F1, for example, information such as frequency information or a subcarrier index of F1, where F1 is a frequency domain position of an SS of each cell.

For example, the correspondence is a correspondence between a sequence parameter of the SS and frequency domain position information of the WUS. As shown in Table 1, the configuration information may include a correspondence between a cell number, parameter information of the SS, and the frequency domain position information of the WUS. In Table 1, the parameter information of the SS is described by using a sequence parameter set as an example. A sequence parameter set of any cell may include a root value, a cyclic shift value, a seed point, or another parameter. It may be understood that, sequence parameters corresponding to different cells in Table 1 belong to different sequence parameter sets.

In addition, a cell number in Table 1 may include an index or an identifier of a cell. Frequency domain position information of a WUS may include a frequency or a subcarrier index of each frequency domain position. For example, F2 in Table 1 represents frequency information of F2 and/or a subcarrier index of F2.

**Table 1**

| Cell number | Parameter information of an SS | Frequency domain position information of a WUS |
|---|---|---|
| First cell | Sequence parameter set 1 | F2 |
| Second cell | Sequence parameter set 2 | F3 |
| Third cell | Sequence parameter set 3 | F4 |
| Fourth cell | Sequence parameter set 4 | F5 |

Using Table 1 as an example, when the terminal device detects an SS on an SS monitoring occasion in the first time window, the terminal device may parse the SS to obtain a sequence parameter. The terminal device may further query Table 1 based on a sequence parameter set to which the sequence parameter belongs, to determine frequency domain position information of a WUS. For example, when the sequence parameter of the SS received by the terminal device is a sequence parameter in the sequence parameter set 1, it indicates that the SS is the SS of the first cell. Therefore, the terminal device may determine, according to Table 1, that the frequency domain position of the WUS of the first cell is F2, and the terminal device may further detect a WUS monitoring occasion at F2 via the secondary functional module, to monitor the WUS of the first cell.

It may be understood that, Table 1 is merely an example for describing the configuration information of the frequency domain position of the WUS of the at least one cell. This application does not exclude that an appropriate modification is made according to Table 1 in actual application. For example, the appropriate modification may include information extension and/or deletion according to Table 1. In a deletion manner, for example, cell number information is deleted according to Table 1. In this case, after determining the sequence parameter of the SS, the terminal device may determine the frequency domain position of the WUS of the cell based on the correspondence between the sequence parameter set and the frequency domain position information of the WUS, and monitor the WUS of the cell based on the frequency domain position, to skip a step of determining the cell.

Manner 2: A frequency domain position of an SS of each cell is denoted as F1, and there is a correspondence between the frequency domain position of a WUS of the cell and a difference between the frequency domain position of the WUS of the cell and F1. The terminal device may query the correspondence based on the detected SS to determine the difference between the frequency domain position of the WUS of the cell and F1, determine the frequency domain position of the WUS based on F1 and the difference, and then monitor the WUS of the cell on the WUS monitoring occasion based on position information of the WUS.

It may be understood that, a difference between manner 2 and manner 1 lies in that, in manner 2, a network device does not need to indicate an absolute position of the frequency domain position of the WUS sent by each cell, in other words, does not need to directly and separately indicate frequency domain values of F2, F3, F4, and F5, but indicates a frequency domain difference between frequency domain positions of WUSs sent by different cells and frequency domain positions of SSs sent by the cells. Because a quantity of bits required for indicating the frequency domain difference is generally less than a quantity of bits for indicating the absolute frequency domain position, bit overheads required for configuring the correspondence in manner 2 are less than those required in manner 1, and air interface signaling overheads may be reduced. In addition, in manner 2, the configuration information may further include indication information of F1, for example, frequency information of F1.

Optionally, the difference between the frequency domain position of the WUS and F1 may be represented as a frequency domain difference, or may be represented by a multiple relationship between the frequency domain difference and a unit increment. The unit increment is denoted as deltaF, and represents a fixed bandwidth value. A difference between the frequency domain position of the WUS and F1 may be represented as n times deltaF, where n is a real number.

It may be understood that, if deltaF is used to indicate the difference between the frequency domain position of the WUS and F1, the configuration information that is of the frequency domain position of the WUS of the at least one cell and that is sent by the network device to the terminal device may include a value of deltaF.

As shown in Table 2, a difference between the frequency domain position of the WUS of a first cell and F1 is one time deltaF, that is, n=1. This indicates that the frequency domain position of the WUS of the first cell is (F1+deltaF).

For descriptions of the cell number and the SS transmission information, refer to Table 1. Details are not described again.

**Table 2**

| Cell number | Parameter information of an SS | Difference between a frequency domain position of a WUS and F1 |
|---|---|---|
| First cell | Sequence parameter set 1 | deltaF |
| Second cell | Sequence parameter set 2 | 2*deltaF |
| Third cell | Sequence parameter set 3 | 3*deltaF |
| Fourth cell | Sequence parameter set 4 | 4*deltaF |

Using Table 2 as an example, when the terminal device detects the SS on an SS monitoring occasion in the first time window, the terminal device may parse the SS to obtain a sequence parameter. The terminal device may further query Table 2 based on a sequence parameter set to which the sequence parameter belongs, to determine the difference between frequency domain position information of a WUS and F1, and then determine the frequency domain position of the WUS based on F1, deltaF, and the difference. For example, when the sequence parameter of the SS received by the terminal device is a sequence parameter in the sequence parameter set 1, it indicates that the SS is the SS of the first cell. Therefore, the terminal device may determine, according to Table 2, that the difference between the frequency domain position of the WUS and F1 is deltaF, and may further determine that the frequency domain position of the WUS of the first cell is (F1+deltaF), and the terminal device may further detect a WUS monitoring occasion at (F1+deltaF) via the secondary functional module, to monitor the WUS of the first cell.

It may be understood that, Table 2 is merely an example for describing the configuration information of the frequency domain position of the WUS of the at least one cell. This application does not exclude that an appropriate modification is made according to Table 2 in actual application. For example, the appropriate modification may include information extension and/or deletion according to Table 2. In a deletion manner, for example, cell number information is deleted according to Table 2. In this case, after determining the sequence parameter of the SS, the terminal device may determine the difference between the frequency domain position of the WUS of the cell and F1 based on the correspondence between the sequence parameter set and the difference between the frequency domain position of the WUS and F1, determine the frequency domain position of the WUS of the cell based on F1, deltaF, and the difference, and monitor the WUS of the cell based on the frequency domain position, to skip a step of determining the cell.

Optionally, in an implementation of this application, based on the information about the first time window shown in S101, the terminal device may perform a cell search in the first time window via the secondary functional module. If measurement quality of an SS in the first time window meets a receiving requirement of the WUS, the terminal device may determine the frequency domain position of the WUS of the cell in the manner shown in this application, and receive the WUS of the cell at the corresponding frequency domain position. If there is no the SS of the cell whose signal quality meets the receiving requirement of the WUS, the terminal device may wake up the main functional module to perform the cell search.

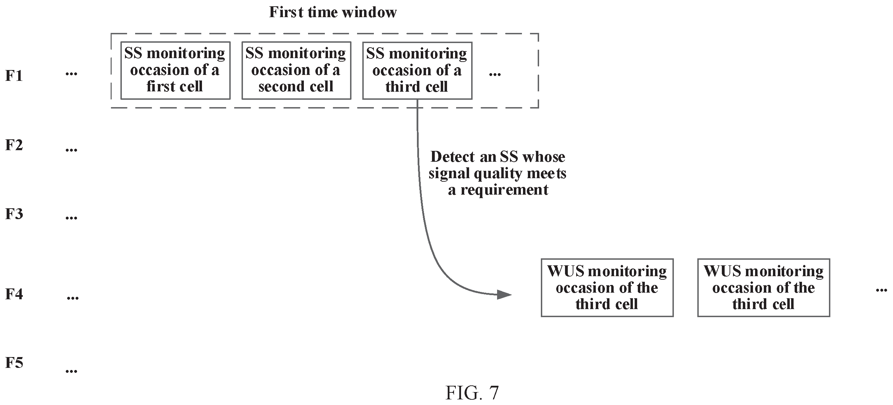

The receiving requirement of the WUS herein is used to determine whether a cell meets a communication quality requirement. For example, the requirement includes: The measurement quality of the SS is not lower than a specific threshold requirement, and duration is not lower than specific preset duration T1. For example, as shown in FIG. 7, the terminal device may monitor an SS monitoring occasion in a first time window via the secondary functional module at F1. When the terminal device detects an SS in a third cell, and signal quality of the SS in the third cell meets a requirement, the terminal device may monitor, via the secondary functional module, a WUS of the third cell at the frequency domain position of the WUS of the third cell based on the WUS monitoring occasion.

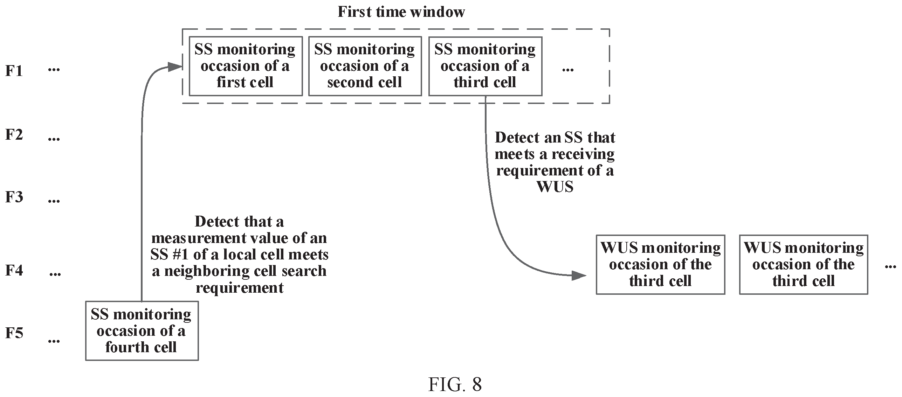

Optionally, in another implementation of this application, after obtaining the configuration information of the SS and the WUS of the local cell, the terminal device may monitor the WUS via the secondary functional module based on the WUS monitoring occasion and/or the frequency domain position of the WUS of the local cell that are/is indicated by the configuration information, and periodically measure the SS of the local cell; and/or the terminal device may measure the SS of the local cell in an LP-SS window of F1 based on the period of the first time window. For example, in FIG. 8, the camped-on cell or the serving cell is a fourth cell, and the terminal device may monitor a WUS monitoring occasion of the fourth cell at F5, and periodically monitor an SS at F5 based on the configuration information of the SS; and/or the terminal device may periodically monitor an SS of the fourth cell at F1 based on a period of the first time window.

As shown in FIG. 8, when the terminal device detects an SS #1 of the fourth cell at F5, if a measurement value of the SS #1 meets a neighboring cell search requirement, or the terminal device does not detect the SS of the fourth cell at F5, the terminal device may measure quality of the SS of a neighboring cell in the first time window of F1 via the secondary functional module, to implement neighboring cell search. Optionally, if the terminal device monitors and determines that an SS of a neighboring cell that meets the WUS receiving requirement exists, for example, an SS #2 shown in FIG. 8, the terminal device may determine the SS #2 in the manner shown in this application. Because a cell to which the SS #2 belongs is a third cell, the terminal device may monitor the WUS of the cell at a frequency domain position F4 of the WUS of the third cell. If there is no the SS of the cell whose signal quality meets the receiving requirement of the WUS in the first time window at F1, the terminal device may switch to the main functional module to perform the cell search.

In this implementation, the neighboring cell search requirement may be used to trigger the terminal device to perform neighboring cell measurement. For example, when the requirement is met, the terminal device is triggered to measure the SS of the neighboring cell in the first time window via the secondary functional module. For example, the requirement may include: Measurement quality of the SS detected by the terminal device in the local cell is lower than a specific threshold, and duration in which the measurement value is lower than the threshold SS is greater than specific preset duration T2, or a quantity of times that the measurement value is lower than the threshold is greater than a preset quantity of times.

In addition, in this implementation, a receiving requirement of the WUS is used to determine whether a cell meets a communication quality requirement. For example, the requirement includes: Measurement quality of an SS of a neighboring cell is not lower than a threshold requirement and/or duration of the SS is not lower than preset duration T1. Alternatively, the requirement includes one or more of the following conditions: The measurement quality of the SS of the neighboring cell is not lower than measurement quality of the SS of the local cell, the measurement quality of the SS of the neighboring cell is not lower than measurement quality of the SS of the local cell and a difference between the measurement quality of the SS of the neighboring cell and the measurement quality of the SS of the local cell is greater than a threshold, and the duration of the SS of the neighboring cell is greater than preset duration T3.

It may be understood that, to implement the functions in the foregoing embodiments, a base station and a terminal include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware in a manner of hardware driven by computer software depends on particular application scenarios and design constraints of the technical solutions.

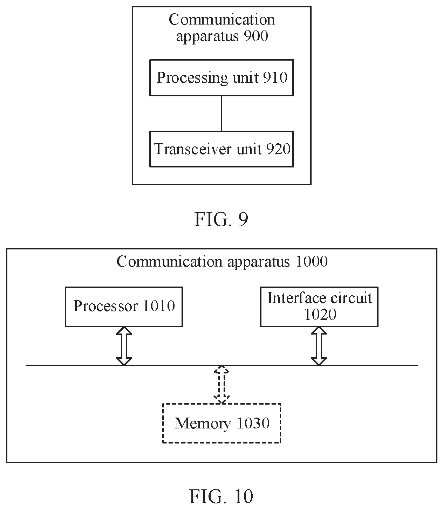

FIG. 9 and FIG. 10 each are a diagram of a possible structure of a communication apparatus according to an embodiment of this application. These communication apparatuses may be configured to implement functions of the terminal device or the base station in the foregoing method embodiments, and therefore can also implement beneficial effects of the foregoing method embodiments. In embodiments of this application, the communication apparatus may be one of the terminals 120a to 120j shown in FIG. 1, may be the base station 110a or 110b shown in FIG. 1, or may be a module (like a chip) used in the terminal or the base station.

As shown in FIG. 9, the communication apparatus 900 includes a processing unit 910 and a transceiver unit 920. The communication apparatus 900 is configured to implement the functions of the UE or the base station in the method embodiment shown in FIG. 4.

When the communication apparatus 900 is configured to implement the function of the terminal device in the method embodiment shown in FIG. 4, the transceiver unit 920 may be configured to receive information about a first time window, and detects a synchronization signal of at least one cell in the first time window via a secondary functional module.

When the communication apparatus 900 is configured to implement the function of the base station in the method embodiment shown in FIG. 4, the processing unit 910 may be configured to determine information about a first time window; and the transceiver unit 920 may be configured to send the information about the first time window, and send a synchronization signal of at least one cell in the first time window.

For more detailed descriptions about the processing unit 910 and the transceiver unit 920, refer to related descriptions in the method embodiments shown in FIG. 4.

As shown in FIG. 10, a communication apparatus 1000 includes a processor 1010 and an interface circuit 1020. The processor 1010 and the interface circuit 1020 are coupled to each other. It may be understood that, the interface circuit 1020 may be a transceiver or an input/output interface. Optionally, the communication apparatus 1000 may further include a memory 1030 configured to store instructions to be executed by the processor 1010, store input data required by the processor 1010 to run the instructions, or store data generated after the processor 1010 runs the instructions.

When the communication apparatus 1000 is configured to implement the method shown in FIG. 4, the processor 1010 is configured to implement a function of the foregoing processing unit 910, and the interface circuit 1020 is configured to implement a function of the foregoing transceiver unit 920.

When the foregoing communication apparatus is a chip used in a UE, the chip in the UE implements the function of the UE in the method embodiments. The chip in the UE receives a signal or information by using another module (for example, a radio frequency module or an antenna) in the UE, where the signal or the information is sent by a base station to the UE. Alternatively, the chip in the UE sends information to another module (for example, a radio frequency module or an antenna) in the UE, where the information is sent by the UE to a base station.

When the foregoing communication apparatus is a module used in a base station, the module in the base station implements the function of the base station in the method embodiments. The base station module receives information from another module (for example, a radio frequency module or an antenna) in the base station, where the information is sent by a terminal device to the base station. Alternatively, the base station module sends information to another module (for example, a radio frequency module or an antenna) in the base station, where the information is sent by the base station to a terminal device. The module in the base station herein may be a baseband chip in the base station, or may be a CU, a DU, or another module. The DU may alternatively be an apparatus in an open radio access network (open radio access network, O-RAN) architecture, for example, an open CU or open DU.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, any regular processor, or the like.

The method steps in embodiments of this application may be implemented in hardware, or may be implemented in software instructions executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to the processor, so that the processor can read information from the storage medium and write information into the storage medium. The storage medium may be a component of the processor. The processor and the storage medium may be disposed in an ASIC. In addition, the ASIC may be located in the base station or the O-RAN. The processor and the storage medium may exist in the base station or the O-RAN as discrete components.

All or a part of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or instructions are loaded and executed on a computer, procedures or functions in embodiments of this application are all or partially executed. The computer may be a general-purpose computer, a dedicated computer, a computer network, a network device, a user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or nonvolatile storage medium, or may include two types of storage media: a volatile storage medium and a nonvolatile storage medium.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be in a singular form or a plural form. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that, various numbers in embodiments of this application are merely for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a terminal device or a chip system in the terminal device, wherein the terminal device comprises a main functional module and a secondary functional module, power consumption of the secondary functional module is lower than that of the main functional module, and the method comprises:
receiving information about a first time window, wherein the first time window comprises a monitoring occasion of a synchronization signal, and a monitoring occasion of a wake-up signal is outside the first time window;
detecting a synchronization signal of at least one cell in the first time window via the secondary functional module; and
performing time-frequency synchronization, neighboring cell measurement, serving cell measurement, or camped-on cell measurement based on the synchronization signal.

2. The method according to claim 1, wherein the method further comprises:
detecting, via the secondary functional module, a wake-up signal on the monitoring occasion of the wake-up signal outside the first time window.

3. The method according to claim 1 or 2, wherein the synchronization signal comprises a first synchronization signal of a first cell, and the wake-up signal comprises a first wake-up signal of the first cell, wherein
a frequency domain position corresponding to the first synchronization signal is different from a frequency domain position of the first wake-up signal.

4. The method according to claim 3, wherein the synchronization signal further comprises a second synchronization signal of a second cell, and the frequency domain position corresponding to the first synchronization signal is the same as a frequency domain position corresponding to the second synchronization signal.

5. The method according to claim 4, wherein the wake-up signal comprises a second wake-up signal of the second cell, and the frequency domain position corresponding to the second synchronization signal is different from a frequency domain position of the wake-up signal of the second cell.

6. The method according to claim 5, wherein the frequency domain position corresponding to the first wake-up signal is different from the frequency domain position of the second wake-up signal.

7. The method according to any one of claims 3 to 6, wherein the method further comprises:
determining the frequency domain position of the first wake-up signal based on the first synchronization signal.

8. The method according to claim 1 or 2, wherein a frequency domain position of the wake-up signal is the same as a frequency domain position of the synchronization signal.

9. The method according to any one of claims 1 to 8, wherein the method further comprises:
determining that neighboring cell measurement results corresponding to synchronization signals of all cells in the first time window do not meet a receiving condition of the wake-up signal; and
performing a cell search via the main functional module.

10. A communication method, comprising:
sending information about a first time window, wherein the first time window comprises a monitoring occasion of a synchronization signal, and a monitoring occasion of a wake-up signal is outside the first time window; and
sending a synchronization signal of at least one cell in the first time window.

11. The method according to claim 10, wherein the method further comprises:
sending a wake-up signal on the monitoring occasion of the wake-up signal outside the first time window.

12. The method according to claim 10 or 11, wherein the synchronization signal comprises a first synchronization signal of a first cell, and the wake-up signal comprises a first wake-up signal of the first cell, wherein
a frequency domain position corresponding to the first synchronization signal is different from a frequency domain position of the first wake-up signal.

13. The method according to claim 12, wherein the synchronization signal further comprises a second synchronization signal of a second cell, and the frequency domain position corresponding to the first synchronization signal is the same as a frequency domain position corresponding to the second synchronization signal.

14. The method according to claim 13, wherein the wake-up signal comprises a second wake-up signal of the second cell, and the frequency domain position corresponding to the second synchronization signal is different from a frequency domain position of the wake-up signal of the second cell.

15. The method according to claim 14, wherein the frequency domain position corresponding to the first wake-up signal is different from the frequency domain position of the second wake-up signal.

16. The method according to any one of claims 12 to 15, wherein the frequency domain position of the first wake-up signal is determined based on the first synchronization signal.

17. The method according to claim 10 or 11, wherein a frequency domain position of the frequency domain position of the wake-up signal is the same as a frequency domain position of the synchronization signal.

18. A communication apparatus, comprising a processor, wherein the processor is configured to execute a computer program or instructions, to implement the method according to any one of claims 1 to 17.

19. The apparatus according to claim 18, further comprising a memory and/or a transceiver, wherein the memory is configured to store the computer program or the instructions, and the transceiver is used by the apparatus for communication.

20. A communication apparatus, comprising a module configured to perform the method according to any one of claims 1 to 17.

21. A computer-readable storage medium, wherein the storage medium stores a computer program or instructions, and when the computer program or the instructions are executed by a communication apparatus, the method according to any one of claims 1 to 17 is implemented.

22. A computer program product, comprising a computer program or instructions, wherein when the computer program or the instructions are executed by a computer, the computer is caused to implement the method according to any one of claims 1 to 17.

23. A communication system, comprising a communication apparatus configured to perform the method according to any one of claims 1 to 9, and a communication apparatus configured to perform the method according to any one of claims 10 to 17.

24. A chip, wherein the chip is coupled to a memory, and the chip reads a computer program stored in the memory, to perform the method according to any one of claims 1 to 17.

25. A communication apparatus, configured to perform the method according to any one of claims 1 to 17.
